# EUROPEAN PATENT APPLICATION

(11) **EP 3 477 561 A1**
(43) Date of publication of application: **01.05.2019**
(21) Application number: 17198832.2
(22) Date of filing: 27.10.2017
(51) Int. Cl.: G06Q 10/06, G06Q 50/32, G06Q 50/28

(54) **SYSTEM FOR GOODS DELIVERY**

(71) Applicant: Nokia Technologies Oy, 02610 Espoo (FI)
(72) Inventor: BITAULD, David, Cambridge, CB5 8DR (GB); LI, Hongwei, Cambridge, CB4 1RY (GB); MARTIN LOPEZ, Enrique, Cambridge, CB4 3DN (GB); PALYUTINA, Karina, Cambridge, CB4 2AW (GB); ROENNOW, Troels F., Cambridge, CB2 9BG (GB)
(74) Representative: Seppo Laine Oy

(57) **Abstract**

According to an example aspect of the present invention, there is provided a method, comprising: defining a delivery identifier for delivery of goods from a sender to a receiver, defining a relay for the delivery of goods, selecting one or more sender couriers to send the goods to the relay and/or selecting one or more receiver couriers to receive the goods from the relay, providing a smart contract for the goods delivery to the distributed network, the smart contract being associated with tokens for confirming delivery, and providing the tokens, the delivery identifier and an identifier of the relay to the selected one or more couriers.

## Description

### FIELD

The present invention relates to systems for goods delivery, such as delivery of letters or packages by postal delivery, and in particular to systems for goods delivery applying non-trusted couriers.

### BACKGROUND

Utilization of new decentralized systems for postal mail and supply chain has been discussed in the past few years, wherein an aim is to improve transparency of the goods delivery. One application would be the decentralisation of postal services, where a large number of small independent actors could participate to the delivery. In such a decentralised system each stakeholder could collect information about users sending and receiving parcels. This information could be used to profile the users and be sold to some entities with whom the users might not wish to share this information.

### SUMMARY

The invention is defined by the features of the independent claims. Some specific embodiments are defined in the dependent claims.

According to a first aspect of the present invention, there is provided a method, comprising: defining a delivery identifier for delivery of goods from a sender to a receiver, defining a relay for the delivery of goods, selecting one or more sender couriers to send the goods to the relay and/or selecting one or more receiver couriers to receive the goods from the relay, providing a smart contract for the goods delivery to the distributed network, the smart contract being associated with tokens for confirming delivery, and providing the tokens, the delivery identifier and an identifier of the relay to the selected one or more couriers.

According to a second aspect of the present invention, there is provided an apparatus, comprising at least one processing core, at least one memory including computer program code, the at least one memory and the computer program code being configured to, with the at least one processing core, cause the apparatus at least to: define a delivery identifier for delivery of goods from a sender to a receiver, define a relay for the delivery of goods, select one or more sender couriers to send the goods to the relay and/or selecting one or more receiver couriers to receive the goods from the relay, provide a smart contract for the goods delivery to the distributed network, the smart contract being associated with tokens for confirming delivery, and provide the tokens, the delivery identifier and an identifier of the relay to the selected one or more couriers.

According to a third aspect, there is provided a computer program product or a non-transitory computer readable medium having stored thereon a set of computer readable instructions that, when executed by at least one processor, cause an apparatus to at least: define a delivery identifier for delivery of goods from a sender to a receiver, define a relay for the delivery of goods, select one or more sender couriers to send the goods to the relay and/or selecting one or more receiver couriers to receive the goods from the relay, provide a smart contract for the goods delivery to the distributed network, the smart contract being associated with tokens for confirming delivery, and provide the tokens, the delivery identifier and an identifier of the relay to the selected one or more couriers..

According to an embodiment, the smart contract for the goods delivery is configured to validate the delivery of the goods between the sender and the relay by the one or more sender relays and between the relay and receiver by the one or more receiver couriers on the basis of tokens received from the couriers.

According to an embodiment, a multi-signature contract comprising signatures of at least the selected couriers is provided by a blockchain transaction to a blockchain-based network for validation.

### BRIEF DESCRIPTION OF THE DRAWINGS

FIGURE 1 illustrates a method in accordance with at least some embodiments of the present invention;
FIGURES 2 and 3 illustrate example systems capable of supporting at least some embodiments of the present invention;
FIGURE 4 illustrates a goods delivery process in accordance with at least some embodiments of the present invention; and
FIGURE 5 illustrates an apparatus in accordance with at least some embodiments of the present invention.

### EMBODIMENTS

There are now provided methods and apparatuses for decentralized goods delivery system facilitating anonymity for senders and receivers. At least one intermediate location or entity, herein referred to as a relay, is defined to divide delivery of goods between a sender and a receiver into at least two sub-sections. A smart contract for the goods delivery is provided to a distributed network, the smart contract being associated with tokens issued for selected couriers for confirming delivery. A smart contract may be generally refer to a computerized transaction protocol that executes terms of an agreement or agreed relationship between parties. A blockchain-based smart contract is visible to all users of the blockchain.

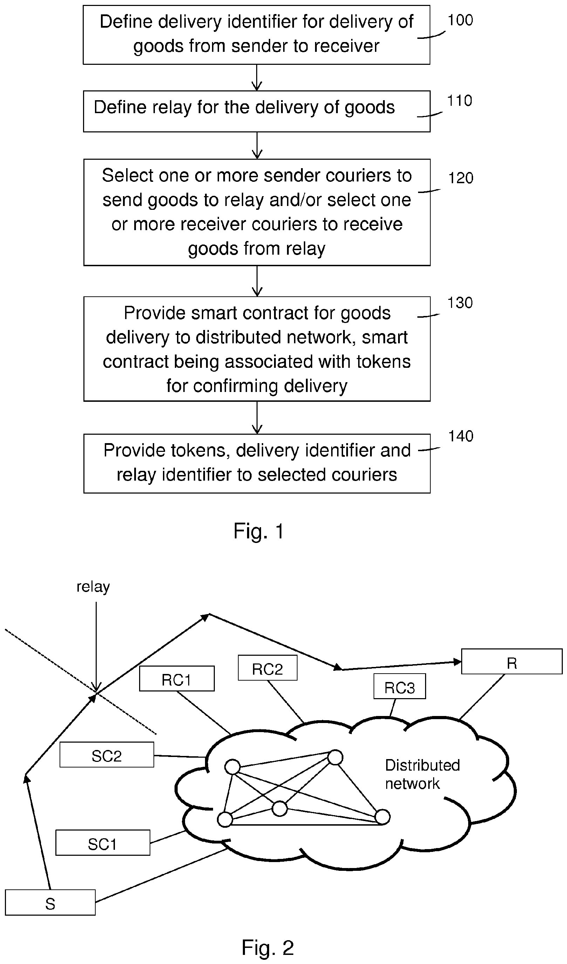

FIGURE 1 illustrates a method according to some embodiments. The method may be implemented in an apparatus of a sender or receiver of goods, such as a user device, a service provider device, or a merchant device. A delivery service or an application may be configured to carry out at least some of the features illustrated in connection with Figure 1.

A delivery identifier is defined 100 for delivery of goods from a sender to a receiver. The goods to be delivered may be a parcel, a packet, mail, for example. Block 100 may be entered upon agreeing a delivery between the sender and the receiver, such as a result of interacting online regarding a purchase of a product or in response to initiating setting up the delivery between the sender and the receiver via a service or an app for this purpose. However, it is to be noted that Figure 1 may be entered without instant preceding interaction between the sender and the receiver, but instead e.g. in response to an indication of a need for a goods delivery service for or by a logistics service provider. The delivery identifier may be created in block 100 or received from another source on the basis of the interaction or information of the goods, for example. The delivery identifier is associated with the delivered goods, e.g. the goods may be labelled with the delivery identifier. In some embodiments, a specific parcel identifier is applied as the delivery identifier.

A relay is defined 110 for the delivery of goods. Thus, an appropriate relay may be selected for the delivery, identified by a relay identifier, such as a relay address. The relay, which may in some embodiments be referred to as relay location or relay entity, may be a position agreed by the sender and receiver, where a sender's courier transmits the parcel to a receiver's courier. The relay could thus be a meeting location. In some other embodiments, the relay may be an entity, such as a storage warehouse or logistics service provider, or a specific resource thereof.

One or more sender couriers is selected 120 to send the goods to the relay and/or one or more receiver couriers is selected to receive the goods from the relay.

A smart contract for the goods delivery is provided 130 to the distributed network, the smart contract for the goods delivery being associated with tokens for validating or confirming delivery. The tokens, the delivery identifier and the relay identifier are provided 140 to the selected couriers. The provision 130 and/or 140 may refer to sending or causing sending of the associated information by the apparatus carrying out the method of Figure 1, for example.

The smart contract for the goods delivery may be configured to validate the delivery of the goods between the sender and the relay by the one or more sender relays and between the relay and receiver by the one or more receiver couriers on the basis of tokens received from the couriers. Hence, the smart contract for the goods delivery can also be referred to as the smart contract for goods delivery validation. The smart contract for the goods delivery may validate also payment for the couriers after the validation of the goods delivery. The validation may be a further step in the method of Figure 1. A courier sends for the smart contract for the goods delivery a token it received from a subsequent courier or the receiver upon reception of the goods. An anonymous cryptocurrency payment system may be applied, wherein the payment is conditional the courier tasks being completed. Task completion may be proven by collecting tokens at different stages of the delivery.

As in the examples below, the smart contract for the goods delivery may be a multi-signature contract generated by the sender and/or receiver and comprising digital signatures of at least the selected couriers, associated with the respective secret keys required to be received for validating a courier's delivery task.

The present features facilitate that none of the stakeholders (sender, receiver, couriers) are able to link the origin and destination of a parcel. Hence, an anonymous delivery is enabled, where linking the origin and the destination of the parcel would require all the couriers to be corrupted.

FIGURE 2 illustrates a system in which at least some of the present embodiments may be applied. S, R and SC1 (first sender courier), SC2, RC1 (first receiver courier), RC2 and RC3 represent devices of associated sender, receiver, and couriers, respectively. The arrowed lines illustrate transfer of goods from the sender to the receiver. At least some of the devices may be connected to a distributed network, such as a blockchain-based network. The distributed network may comprise a number of nodes and at least some of the devices may operate as nodes in the distributed network, or one or more of the devices may connect a node of the distributed network so that the latter operates on its behalf. Information associated with agreed delivery of goods, such as the multi-signature contract, may be stored in a distributed ledger stored at least in part of nodes of the distributed network.

The devices S, R and SC1, SC2, RC1, RC2 and RC3 may comprise corporate, authority, and/or user devices, such as a server, a desktop/tablet/laptop computer, smartphone, wearable, auxiliary device, vehicle unit, or other suitable electronic device. The system may comprise an administrator or management node, a hub, relay or other kind of intermediate device (not shown) for connecting a node to further networks or services, such as another distributed or centralized computing system or a cloud service. The nodes are mutually addressable in a suitable way, for example, they may be connected to an internet protocol, IP, network. Messages released into the IP network with a recipient address are routed by the network to the recipient node identified by the recipient address. IP is not the only suitable networking technology used, for example, various peer-to-peer networking models are also suitable.

The delivery of the goods is separated into two sections: one section known only by the sender and the other section known only by the receiver. The relay separates the two sections between the sender and receiver. In Figure 2, couriers represented by SC2 and SC1 are booked by the sender and may be referred to as sender couriers. Couriers represented by RC1, RC2 and RC3 are booked by the receiver and may be referred to as receiver couriers.

The relay may simply be a place agreed by the sender and receiver, where exchange occurs from the sender courier to the receiver's courier. In theory, the relay could be simply a random meeting point for the couriers. The sender could then agree on a time and place for the package transmission. However, to make the transmission more practical, this relay could be the storage warehouse of one of the involved couriers or a locker with a code known by both involved couriers. However, it is to be appreciated that in some embodiments there may be some activity regarding the goods by the relay, for example transfer of the goods from a reception to a storage position and to a shipment position.

Real identities of the sender and the receiver may thus be hidden from each other. They may know each other by their temporary identifiers, such as public keys, that they used during the interaction that led to the delivery, such as an online purchase. They don't know each other's location but only the location of the relay. The sender, the receiver and the couriers may be configured to identify themselves with the public part of a public-private key pair that can be changed for every new transaction.

The delivery service may comprise a list of available couriers as well as a list of relay addres(ses) (addressPR). There are several ways for the sender and/or receiver to select the relay:
- A random place in the world. This provides maximum anonymity but also potentially maximum delivery cost.
- If the sender and/or receiver agree to share information about what area they are located in (e.g. their country), the relay location can be chosen accordingly. The larger the specified area the better the anonymity, but also the delivery costs likely increase.
- The sender or the receiver can also decide to provide false information on their area. This provides more anonymity and the delivery would simply be more expensive for them.

In some embodiments, the delivery service or a further (or second) smart contract is configured to select 110 the relay for the delivery of goods on the basis of an indication of a location area of the sender and an indication of a location area of the receiver. Such further smart contract may be also referred as a system or configuration smart contract, for example. The system smart contract may be also configured to perform at least some of the further features related to the relay selection and/or other features related to setting up the goods delivery (as compared to the multisignature contract(s) provided 130 for the delivery process and for validating the delivery). Such system smart contract may be initiated in response to a need to establish goods delivery and configured at least to arrange courier selection, but may also be configured to control other aspects related setting up goods delivery or for arriving at good delivery process or agreement illustrated below, such as the courier (pre)selection 120.

This enables to avoid a lack of consensus between the sender and receiver over the location of the relay. Once the sender and the receiver have revealed their area with the resolution of their choice (e.g. sender: London, receiver: Asia), an appropriate relay is decided on the basis of the received source and target location information. For example, the system smart contract may be configured to select the relay by minimizing the potential cost or by picking a pseudo-random relay within a reasonable area (e.g. Europe or Asia but not Africa nor America nor Pacific).

The selection 120 of couriers to and from the relay can be done by the sender and receiver respectively. The sender and/or receiver may publicize their need (origin, destination, delivery time and volume/weight of the parcel) and couriers bid to offer the best possible rate. In another embodiment, couriers publicize their offer (area covered and fares), and the sender and/or receiver selects the most suitable offer.

However a problem arises if they both pick the same couriers. In this case the courier would be able to link the origin and destination of the parcel.

In some embodiments, the sender couriers and the receiver couriers are of different subsets of available couriers, and the delivery service or the system smart contract is configured to select the sender couriers and the receiver couriers.

In order to avoid selection of the same courier as sender and receiver courier, the couriers may be divided into two subsets before the selection 120. The sender can select the couriers from one subset and the receiver from the other subset. Several deterministic methods are available for selection to be used to form the two subsets, such as a pseudo-random function with a seeds, such as time or sender and receiver's public keys. The selection method may aim to optimize balance in number and price between the two subsets.

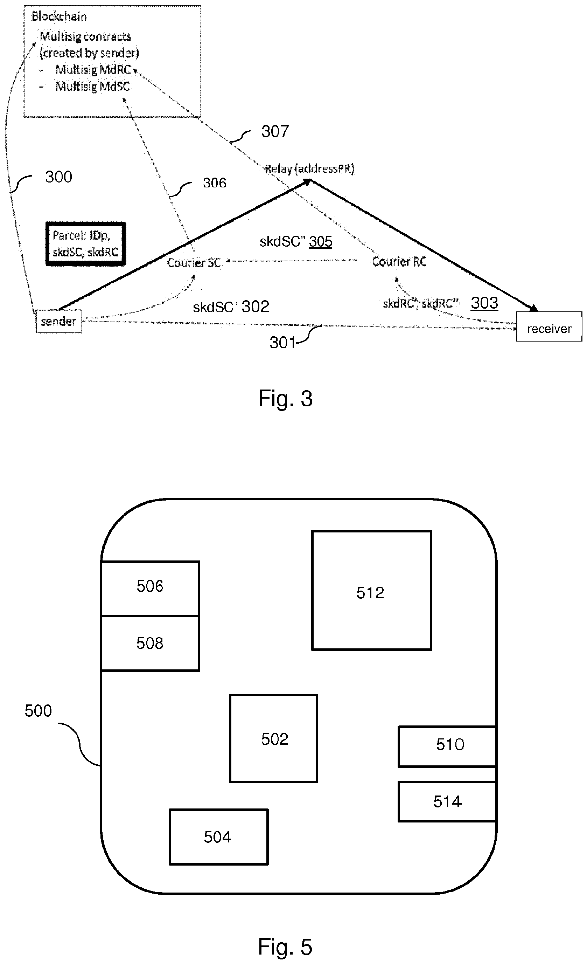

Reference is now made to FIGURE 3 illustrating token distribution. For simplicity, FIGURE 3 illustrates the simplest case of delivery of goods (in this example Parcel) involving single courier per section, but it will be understood that similar procedures may be applied also for multiple couriers per section.

In some embodiments, at least some of the tokens are courier-specific secret keys. Each courier-specific secret key may be generated by a public key of an associated courier. However, it will be appreciated that various other types of codes may be used tokens and other generation methods may be applied.

The smart contract(s) for the goods delivery, in the present example embodiments the multi-signature contract(s), may be generated or adapted and provided 300 to a distributed network, such as a blockchain-based network, after the sender and receiver have agreed to the terms. The multi-signature contract may comprise separate contracts MdSC, MdRC for sender and receiver, respectively. The smart contract may be configured to validate the delivery of the goods in response to receiving from a courier a set of secret keys corresponding to a set of sender side and receiver side specific secret keys stored in the multi-signature contract in connection with agreeing on the delivery. For example, in order to prove that the courier's task has been performed and the goods have been delivered the courier needs to acquire three different secret keys. For example, for sender courier SC these keys are referred to as skdSC, skdSC', skdSC".

For example, a receiver courier RC selected to deliver the goods further from a sender courier SC may be provided with:
- the delivery identifier for the delivery of goods, in the example of Figure 3 referred to as parcel ID IDp,
- an identifier of a receiver (or a further third courier in case of multiple receiver couriers),
- a relay identifier,
- a first secret key skdRC' for proving that the courier was selected carry out the delivery,
- a second secret key skdSC" to be provided to the sender courier in response to receiving the goods from the sender courier,
- a third secret key skdRC", obtained upon reception of the goods from the receiver (or a further third courier) for proving delivery to the receiver (or the third courier) for the multi-signature contract.

The goods delivered (Parcel) may comprise a fourth (type of) secret key skdSC, skdRC associated with the receiver and/or sender multi-signature contracts (MdRC, MdSC), for proving that the courier has had the goods and to be used as one parameter for validating the delivery. There may be a single such secret key for all couriers or a specific key skdSC, skdRC for each courier. Each of these secret keys may be encrypted with the couriers' public keys (pkSC, pkRC).

For example, the sender may coordinate or control the establishment or configuration of the multi-signature smart contract and provide (in connection with block 140 of Figure 1) 300, 301, 302 at least some of the secret keys for the multi-signature contract, the receiver, and at least some couriers. The sender may thus send 301 the second secret key skdSC" to the receiver, which is further provided to the receiver courier RC to be provided 305 to the sender courier SC in response to receiving the goods. However, in another embodiment, the receiver establishes or provides the keys, whereby the receiver may send the second secret key skdSC"to the sender (and the (first) receiver courier RC). As the relay may be a passive place, the key skdSC" needed by the last courier on the sender side (SC in Figure 3) is provided 305 by the first courier on the receiver side (RC). The receiver provides for the receiver courier RC the first secret key skdRC' in connection with courier assignment (e.g. at block 140) and the third secret key skdRC" 303 in response to receiving the goods. If there are e.g. multiple receiver couriers, they are each provided with the IDp, the first type of secret key (skdRC1', skdRC2", etc), and the second type of secret key (skdSC", skdRC1", skdRC2", etc) to be provided for a preceding courier when receiving the goods.

FIGURE 3 also illustrates provision of secret keys to the multi-signature contract for goods delivery by the couriers. The multi-signature contract may be configured to validate the delivery of the goods from the sender courier SC to the receiver courier RC in response to receiving 306 from the SC the first type of secret key skdSC', the second secret key skdSC", and the fourth secret key skdSC of the goods. Similarly, the delivery by the receiver courier to the receiver may be validated in response to receiving 307 from the receiver courier RC its first secret key skdRC', third key skdRC" received from the receiver, and the fourth secret key skdSC.

The delivery identifier of the parcel IDp may be any suitable identifier, such as a random number. For example, it may be a function of the sender and receivers public keys such as a hash of the two concatenated keys. IDp may be chosen sequentially as deliveries are requested (1, 2, 3...) or maybe completely chosen by the sender or receiver.

It is to be appreciated that the above provides just some examples and the token provision and utilization and validation may be arranged in various other ways. For example, some other and/or further parameters than the above illustrated secret keys may be applied, or some of the secret keys may be avoided or replaced by other type of token, such as the first secret key.

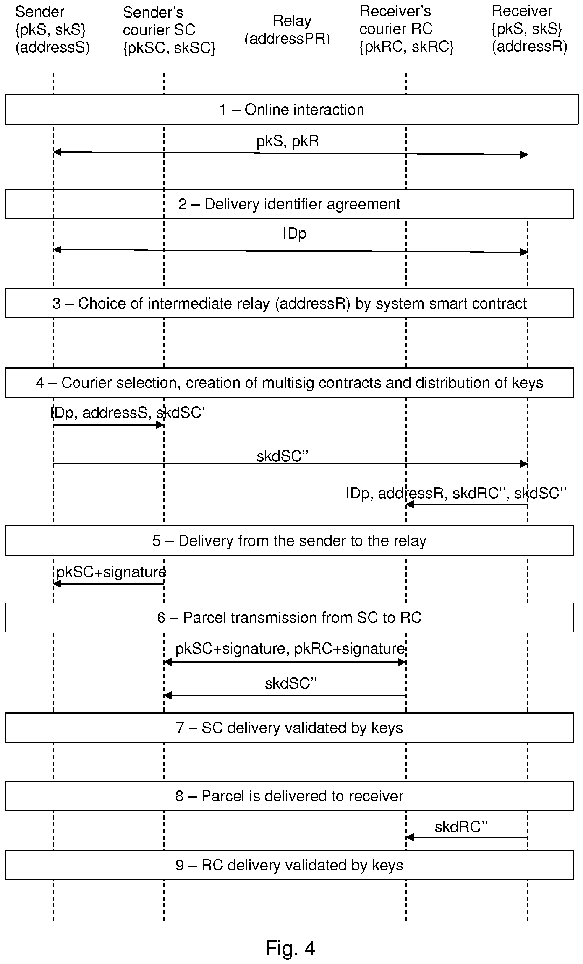

FIGURE 4 illustrates a summarizing process in a simplified system of Figure 3.
1. The sender and the receiver interact online (e.g. for a purchase of a parcel) and know each other by their temporary public keys (pkS and pkR respectively).
2. Following this interaction, a postal delivery may be agreed between sender and the receiver. As a result this transaction they produce a parcel identifier IDp, which could be a function of pkS and pkR.
3. The sender and the receiver share their approximate location (e.g. continent, country) with a decentralized delivery service provided in/by the distributed network, which decides on a relay location addressPR.
4. The sender and the receiver use the decentralised delivery service to organise the delivery to and from the addressPR. Once the couriers are selected, the sender and the receiver create respective multi-signature contracts MdSC and MdRC that they publish on the blockchain. Further, they distribute the corresponding secret keys.
5. The sender courier SC collects the parcel after identifying itself with a signature performed with its key pair (public key pkSC, secret key skSC) and delivers the parcel to the relay.
6. The receiver courier RC collects the parcel at the relay after identifying itself (e.g. similarly by its key pair as the SC in step 5), and provides the skdSC" to sender courier SC.
7. The SC provides the collected keys for the multi-signature contract for validation and subsequent remuneration.
8. The receiver courier RC delivers the parcel to the receiver. The receiver provides the RC with the key skdRC".
9. The SC provides the collected keys for the multi-signature contract for validation and subsequent remuneration.

In some embodiments, the smart contract (for the goods delivery and/or system) is a blockchain smart contract provided by a blockchain transaction to a blockchain-based network for validation. Information of the goods delivery and the smart contract may thus be stored in a blockchain ledger and applied for goods delivery between a sender and a receiver for automatically monitoring and validating the delivery. A distributed ledger can be considered a general database synchronized between many parties, which, at successive time instances, comprises successive states of consensus about a particular matter, here the good delivery process. Such states may be reached by the many parties, typically nodes in a peer-to-peer (P2P) network, following a decentralized consensus algorithm. In general, this provides an agreement between the nodes without assuming trust between them. Different service providers may oversee in the distributed ledger that every participant participating in the decentralized goods delivery process is playing by the rules set by the sender and the receiver.

In some embodiments, also with reference to FIGURE 2, the distributed network is a blockchain network and the nodes operate as blockchain nodes and store local blockchain database. Blockchain state information shared by the nodes may store all the transactions and history carried out in the network, also regarding the smart contract or other goods delivery process management related information. The blockchain state information is stored in or as the blockchain ledger. Each node may comprise the ledger whose content is in sync with other ledgers. The nodes may validate and commit transactions in order to reach consensus. Each node may have their own copy of the ledger which is in some embodiments permission-controlled, so participants see only appropriate transactions.

Changes in resource ownership in the blockchain take the form of blockchain transactions secured by strong cryptography. A blockchain transaction may comprise an identifier of a new owner, that is the recipient, of the resource, together with a cryptographic signature of the previous owner, that is the sender, such that malicious attackers cannot re-assign resources they do not own. Application of blockchain technology and the ledger enable a way to track the unique history of transactions by the individual nodes in the network.

A blockchain transaction comprising the smart contract information may be a public transaction. The transaction record comprises the smart contract information, such as the multi-signature contracts with courier-specific secret keys as illustrated above, and a hash pointer to previous block of the chain. The record may comprise also further information element(s), such as timestamp.

The sender S, the receiver R or another entity generating the smart contract on behalf of the sender and the receiver, may provide a signed blockchain transaction to the blockchain ledger whenever it generates or updates a smart contract. To establish a next block, the transactions are broadcast into the blockchain network. Broadcasting here refers to a dissemination method suitable for the context, which will cause the transactions to be communicated to the nodes of the network in general. Reaching each and every node with each and every transaction is not strictly necessary.

A node establishing the next block may be known as a miner node. A miner node may compile a set of transactions, which it receives from the broadcasts, for the next block, and search for a proof-of-work code that covers all the transactions in the set of transactions for the next block. For example, the proof-of-work code may be a numerical value, with which the contents of the next block, that is, the set of transactions, hashes to a value that is less than a threshold. More generally, there may be a target area of an output space of a hash function, wherein the target space need not be in the low end of the target space. The smaller the target area is, the more difficult it is to discover the proof-of-work. Once a miner discovers the proof-of-work, it can publish the block, which other nodes of the system will then add to the block chain as the new most recent established block.

In case the miner node discovers a proof-or-work based on an incomplete set of transactions, for example if some transactions did not reach the miner node, other nodes in the network will not accept the block into the blockchain, and it will be excluded from a consensus version of the blockchain in the system.

Since an output of a hash function is a pseudorandom function of the input, the set of transactions, hashed by itself, produces a hash value that is essentially randomly placed in the output space of the hash function. The set of transactions may be completely or representatively used as input to the hash function. Modifying the input with a candidate proof-of-work code, which may be known as a nonce, will produce a new hash value, which again is essentially randomly placed in the output space of the hash function. The modification may be as slight as a single bit. Therefore, searching for the correct proof-of-work code, which satisfies a pre-agreed criterion concerning its location in the output space of the hash function, requires repeatedly deriving a hash value with a different candidate proof-of-work code modifying the input to the hash function. Once a proof-of-work code that, with the transactions, produces a hash value in the target area of the output space of the hash function is found, the block is ready. A completed block may be distributed to the system to establish it in the blockchain. Although discussed above in terms of proof-of-work, in some embodiments a proof-of-stake may be used instead of, or additionally to, a proof-of-work. In a proof-of-stake based system, a new block is accepted once a sufficient fraction of resources are proven as owned by nodes ready to accept the new block version.

Once a new block is established, the blockchain becomes longer. A transaction is considered the more reliable, the larger the number of blocks established since the block where the transaction is comprised. This is since transactions are hashed into the chain of blocks, and discrepancies in the block chain are resolved as the block chain gets longer. In each next block in the sequence, a hash of the previous block may be included along with the transactions, attaching the blocks to each other to form the chain. Hashes linking the blocks together to form a chain may be referred to as Merkle hashes. Maliciously modifying a transaction in a block far down the chain would involve re-doing the work of finding proofs for all subsequent blocks, since the input to the hash function for the block comprising the transaction would be changed, causing the resulting hash value, with the proof in that block, to no longer be disposed in the desired area in the output space of the hash function.

FIGURE 5 illustrates an example apparatus capable of supporting at least some embodiments of the present invention. Illustrated is a device 500, which may comprise a communications device arranged to operate as a node in a distributed network, such as a blockchain-based system. The device may be arranged to carry out at least some of the embodiments related to arranging decentralized anonymous goods delivery via one or more couriers as illustrated above. The device may include one or more controllers configured to carry out operations in accordance with at least some of the embodiments illustrated above, such as some or more of the steps illustrated above in connection with Figures 1 to 4. The device may operate as a device of a sender, a receiver, or a service provider of a goods delivery process.

Comprised in the device 500 is a processor 502, which may comprise, for example, a single- or multi-core processor wherein a single-core processor comprises one processing core and a multi-core processor comprises more than one processing core. The processor 502 may comprise more than one processor. The processor may comprise at least one application-specific integrated circuit, ASIC. The processor may comprise at least one field-programmable gate array, FPGA. The processor may be means for performing method steps in the device. The processor may be configured, at least in part by computer instructions, to perform actions.

The device 500 may comprise memory 504. The memory may comprise random-access memory and/or permanent memory. The memory may comprise at least one RAM chip. The memory may comprise solid-state, magnetic, optical and/or holographic memory, for example. The memory may be at least in part accessible to the processor 502. The memory may be at least in part comprised in the processor 502. The memory 504 may be means for storing information. The memory may comprise computer instructions that the processor is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The memory may be at least in part comprised in the processor. The memory may be at least in part external to the device 500 but accessible to the device. For example, control parameters affecting operations related to the generation and/or application of smart contract may be stored in one or more portions of the memory and used to control operation of the apparatus. Further, the memory may comprise device-specific cryptographic information, such as secret and public key of the device 500.

The device 500 may comprise a transmitter 506. The device may comprise a receiver 508. The transmitter and the receiver may be configured to transmit and receive, respectively, information in accordance with at least one wired or wireless, cellular or non-cellular standard. The transmitter may comprise more than one transmitter. The receiver may comprise more than one receiver. The transmitter and/or receiver may be configured to operate in accordance with global system for mobile communication, GSM, wideband code division multiple access, WCDMA, long term evolution, LTE, IS-95, wireless local area network, WLAN, Ethernet and/or worldwide interoperability for microwave access, WiMAX, standards, for example. The device 500 may comprise a near-field communication, NFC, transceiver 510. The NFC transceiver may support at least one NFC technology, such as NFC, Bluetooth, Wibree or similar technologies.

The device 500 may comprise user interface, UI, 512. The UI may comprise at least one of a display, a keyboard, a touchscreen, a vibrator arranged to signal to a user by causing the device to vibrate, a speaker and a microphone. A user may be able to operate the device via the UI, for example to accept incoming telephone calls, to originate telephone calls or video calls, to browse the Internet, to manage digital files stored in the memory 504 or on a cloud accessible via the transmitter 506 and the receiver 508, or via the NFC transceiver 510, and/or to play games.

The device 500 may comprise or be arranged to accept a user identity module or other type of memory module 514. The user identity module may comprise, for example, a subscriber identity module, SIM, and/or a personal identification IC card installable in the device 500. The user identity module 514 may comprise information identifying a subscription of a user of device 500. The user identity module 514 may comprise cryptographic information usable to verify the identity of a user of device 500 and/or to facilitate encryption and decryption of communication effected via the device 500, such as the private and/or public keys as illustrated above.

The processor 502 may be furnished with a transmitter arranged to output information from the processor, via electrical leads internal to the device 500, to other devices comprised in the device. Such a transmitter may comprise a serial bus transmitter arranged to, for example, output information via at least one electrical lead to memory 504 for storage therein. Alternatively to a serial bus, the transmitter may comprise a parallel bus transmitter. Likewise the processor may comprise a receiver arranged to receive information in the processor, via electrical leads internal to the device 500, from other devices comprised in the device 500. Such a receiver may comprise a serial bus receiver arranged to, for example, receive information via at least one electrical lead from the receiver 508 for processing in the processor. Alternatively to a serial bus, the receiver may comprise a parallel bus receiver.

The device 500 may comprise further devices not illustrated in Figure 5. For example, the device may comprise at least one digital camera. Some devices may comprise a back-facing camera and a front-facing camera. The device may comprise a fingerprint sensor arranged to authenticate, at least in part, a user of the device. In some embodiments, the device lacks at least one device described above. For example, some devices may lack the NFC transceiver 510 and/or the user identity module 514.

The processor 502, the memory 504, the transmitter 506, the receiver 508, the NFC transceiver 510, the UI 512 and/or the user identity module 514 may be interconnected by electrical leads internal to the device 500 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. The skilled person will appreciate that above-illustrated embodiments may be combined in various ways. Embodiments illustrated in connection with Figures 1 to 4 may be taken in isolation or further combined together.

Various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in communications.

### ACRONYMS LIST

- ASIC: Application-specific integrated circuit
- BC: Blockchain
- FPGA: Field-programmable gate array
- GSM: Global system for mobile communication
- IC: Integrated Circuit
- LTE: Long term evolution
- NFC: Near-field communication
- PoS: Proof-of-stake
- PoW: Proof-of-work
- RC: Receiver courier
- SC: Sender courier
- UI: User interface
- WCDMA: Wideband code division multiple access,
- WiMAX: Worldwide interoperability for microwave access
- WLAN: Wireless local area network

## Claims

1. A method, comprising:
- defining a delivery identifier for delivery of goods from a sender to a receiver,
- defining a relay for the delivery of goods,
- selecting one or more sender couriers to send the goods to the relay and/or selecting one or more receiver couriers to receive the goods from the relay,
- providing a smart contract for the goods delivery to the distributed network, the smart contract being associated with tokens for confirming delivery, and
- providing the tokens, the delivery identifier and an identifier of the relay to the selected one or more couriers.

2. The method of claim 1, wherein a multi-signature contract comprising signatures of at least the selected couriers is provided by a blockchain transaction to a blockchain-based network for validation.

3. The method of claim 1 or 2, wherein the smart contract for the goods delivery is configured to validate the delivery of the goods between the sender and the relay by the one or more sender relays and between the relay and receiver by the one or more receiver couriers on the basis of tokens received from the couriers.

4. The method of claim 1, 2, or 3, wherein the tokens are courier-specific secret keys, each courier-specific secret key being generated by a public key of an associated courier.

5. The method of claim 4, wherein a second courier selected to deliver the goods further from a first courier is provided with:
- the delivery identifier for the delivery of goods,
- a first secret key for proving that the second courier was selected to carry out the delivery,
- a second secret key to be provided to the first courier in response to receiving the goods from the first courier,
- a third secret key, obtained upon reception of the goods from the receiver or a third courier for proving delivery to the receiver or the third courier for the smart contract for the goods delivery, and
- an identifier of the third courier or the receiver.

6. The method of claim 5, wherein the smart contract for the goods delivery is configured to validate a delivery of the goods from the first courier to the second courier in response to receiving the second secret key, a fourth secret key associated with the goods, and a fifth secret key provided to the first courier for proving that the first courier was selected to carry out the delivery.

7. The method of any preceding claim, wherein the relay is selected for the delivery of goods on the basis of an indication of a location area of the sender and an indication of a location area of the receiver.

8. The method of any preceding claim, wherein the one or more sender couriers and the one or more receiver couriers are selected of different subsets of available couriers.

9. The method according to any preceding claim, wherein a system smart contract is configured to select the one or more sender couriers and the one or more receiver couriers.

10. An apparatus comprising:
- means for defining a delivery identifier for delivery of goods from a sender to a receiver,
- means for defining a relay for the delivery of goods,
- means for selecting one or more sender couriers to send the goods to the relay and/or selecting one or more receiver couriers to receive the goods from the relay,
- means for providing a smart contract for the goods delivery to the distributed network, the smart contract being associated with tokens for confirming delivery, and
- means for providing the tokens, the delivery identifier and an identifier of the relay to the selected one or more couriers.

11. The apparatus of claim 10, wherein the apparatus comprises means for carrying out the method according to any one of claims 2 to 9.

12. A computer program comprising a set of computer readable instructions that, when executed by at least one processor, cause an apparatus to perform the method of any one of claims 1 to 9.

13. A computer-readable storage medium, comprising a computer program according to claim 12.
